(19) Europäisches Patentamt
European Patent Office
Office européen des brevets

(11) **EP 0 728 036 B1**

(12) **EUROPÄISCHE PATENTSCHRIFT**

(45) Veröffentlichungstag und Bekanntmachung des Hinweises auf die Patenterteilung:
**14.01.1998 Patentblatt 1998/03**

(21) Anmeldenummer: 95901374.9

(22) Anmeldetag: **12.11.1994**

(51) Int. Cl.$^6$: **B01J 2/10**

(86) Internationale Anmeldenummer:
**PCT/EP94/03763**

(87) Internationale Veröffentlichungsnummer:
**WO 95/13130 (18.05.1995 Gazette 1995/21)**

(54) **VERFAHREN ZUM HERSTELLEN VON GRANULAT**

PROCESS FOR PRODUCING A GRANULATED MATERIAL

PROCEDE DE PRODUCTION DE GRANULES

(84) Benannte Vertragsstaaten:
**AT CH DE FR IT LI SE**

(30) Priorität: **12.11.1993 CH 3403/93**

(43) Veröffentlichungstag der Anmeldung:
**28.08.1996 Patentblatt 1996/35**

(73) Patentinhaber: **Gregely, Gerhard**
**A-1053 Wien (AT)**

(72) Erfinder:
• **GERGELY, Gerhard**
**A-1053 Wien (AT)**

• **TRITTHART, Wolfram**
**A-9400 Wolfsberg (AT)**

(74) Vertreter:
**Büchel, Kurt F., Dr. et al**
**Patentbüro Büchel & Partner AG**
**Letzanaweg 25-27**
**9495 Triesen (LI)**

(56) Entgegenhaltungen:
EP-A- 0 196 884          WO-A-86/07547
DE-A- 3 149 517          DE-A- 3 443 210

# Beschreibung

Die Erfindung bezieht sich auf ein Verfahren zur kontinuierlichen Herstellung eines Granulates aus einer Pulvermischung aus mindestens zwei Komponenten.

Ein derartiges Verfahren ist beispielsweise der CH-A-478 591 zu entnehmen. Nach diesem Stand der Technik wird ausgeführt, dass eine Nassgranulation gerade bei reaktiven Bestandteilen eines Pulvers kaum durchführbar ist. Es sei daher schwierig gewesen, etwa Zinkweiss ohne Bindemittel zu granulieren. Die Lösung wird nach dieser Literaturstelle in einer Kaltgranulation unter Ausnützung von Adhäsionskräften gesehen, die durch Umlenken des Pulvers mittels Schikanen und anderen rein mechanischen Mitteln erzeugt werden sollen.

In der Praxis erweist sich ein solches Verfahren als sehr unverlässlich, wobei auch eine gleichmässige Korngrösse der entstehenden Granulate nicht gesichert ist. Daher liegt der Erfindung die Aufgabe zugrunde, ein verfahren der eingangs genannten Art so auszugestalten, dass damit relativ grosse Mengen an Granulat in einer zufriedenstellenden Qualität erhalten werden können. Erfindungsgemäss geschieht dies in überraschend einfacher Weise durch Oberflächenklebung der Komponenten der Pulvermischung mit Hilfe von Wasser als einer oberflächlich wirkenden Klebelösung, wie im nachfolgenden beschrieben.

Als nächstliegender Stand der Technik beschreibt WO 86/07547 ein Verfahren zur Herstellung von Brausepulver-Granulat, wobei über oder durch die Pulvermischung ein Heissluftstrom gedrückt und intermittierend wieder abgesaugt wird. Dabei wird zuerst die Pulvermischung durch trockene oder leicht feuchte Heissluft und Anlegen eines Unterdrucks getrocknet und anschliessend durch Beaufschlagung mit heissem Dampf und dadurch verursachter teilweiser Reaktion der Pulverkomponenten miteinander, z.B. Zitronensäure mit Calciumcarbonat zu Calciumcitrat, oberflächlich verklebt. Dieses Verfahren mit seiner ausserordentlich diffizilen Feuchtigkeitseinstellung war bislang nur im Chargenbetrieb, mit einer oder mehreren hintereinander geschalteten Befeuchtungs- und Trocknungsphasen, durchführbar.

Demgegenüber stellt die vorliegende Erfindung eine bemerkenswerte Verbesserung der Feuchtgranulierung dar. Gemäss dem zugrundeliegenden kontinuierlichen Verfahren zur Herstellung von Granulat aus einer Pulvermischung und den verschiedenen, hierin beschriebenen Ausführungsformen wird das für die Oberflächenklebung erforderliche Wasser innerhalb der Trommel freigesetzt, gegebenenfalls durch eine Teilreaktion der reaktiven Komponente(n) der Pulvermischung.

Überraschend ist diese Lösung aus mehreren Gründen. Denn einerseits läuft die erfindungsgemässe Lehre gerade entgegen der des genannten Standes der Technik, der Feuchtigkeit möglichst vermieden haben wollte, um nur ja keine Reaktionen zu erzielen. Dagegen geht die Erfindung bewusst von einer, allerdings nur teilweisen, Reaktion der reaktiven Bestandteile aus, nämlich gerade in einem solchen Ausmasse, dass die oberflächliche Anlagerung der Bestandteile, d.h. die Granulierung, durchgeführt werden kann.

Andererseits wird man in vielen Fällen, wie offenbar auch der Autor des oben genannten Standes der Technik, ein Durchreagieren der reaktiven Bestandteile befürchten müssen. Der Erfindung liegt also auch die Erkenntnis zu Grunde, dass dieser Effekt nicht auftritt, wenn man nur so geringe Mengen an Wasser bzw. an der die Reaktion teilweise auslösenden Flüssigkeit verwendet, dass sie wenigstens angenähert der Kristallwassermenge zumindest einer der Pulverkomponenten entsprechen. Dabei kann es in einzelnen Fällen sogar möglich sein, diese geringen Mengen um etwa 100% zu überschreiten, beispielsweise durch externe Zudosierung von Feuchtigkeit.

Hierin liegt auch ein drittes Überraschungsmoment, denn bisher hat die schwere Beherrschbarkeit der Reaktion die Fachwelt von einem kontinuierlichen, und damit wirtschaftlicheren, Verfahren abgehalten. Besonders Brausegranulate wurden zunächst auf Horden-Trocknern oder in gesonderten Wirbelbetten des sauren und des basischen Anteils, oder auch in einem Vakuumgranulator, chargenweise hergestellt. Damit waren höhere Tagesleistungen praktisch nicht zu erzielen. Dieses Problem der Beherrschung der Reaktion, und damit die Möglichkeit eines kontinuierlichen und wirtschaftlichen Verfahrens wird durch die erfindungsgemässen Massnahmen gelöst.

Insgesamt ergibt sich aber nach dem erfindungsgemässen Verfahren ein doppelter Effekt, indem einerseits eine Trägerbeschichtung durch die Teilreaktion stattfindet, diese aber wiederum eine Aufbaugranulierung klassischer Art begünstigt, wodurch etwaiges abgeriebenes Korn ebenfalls der Granulierung zugeführt wird, was im Endeffekt zu einer relativ engen Korngrössenverteilung führt und die Wirtschaftlichkeit auf Grund der Verringerung der Abriebverluste bzw. Absiebverluste erhöht.

Die vorliegende Erfindung bezieht sich also auf ein Verfahren zur kontinuierlichen Herstellung von Granulat aus einer Pulvermischung aus mindestens zwei Komponenten, wobei das Granulieren in einer zur Horizontalen geneigten Trommel erfolgt, indem das Pulver an einem Ende eingegeben und das Granulat am anderen Ende entnommen wird, wogegen es innerhalb der Trommel während einer gewünschten Verweilzeit unter Durchführung einer Rollbewegung unter weitgehender Vermeidung von Scherkräften zwangsweise transportiert wird.

Wesentlich ist dabei, dass wenigstens eine Komponente der Pulvermischung in Kristall- oder kristalliner Form vorliegt und dass wenigstens eine Komponente Kristallwasser enthält bzw. wenigstens eine Komponente reaktiv ist. Wesentlich ist ferner, dass eine wenigstens angenähert der Kristallwassermenge entsprechende Flüssigkeitsmenge, die zur Bildung einer oberflächlich wirkenden Klebelösung ausreicht, innerhalb der Trommel - gegebenenfalls durch Austreiben des Kristallwassers durch Temperaturerhöhung und/oder durch eine Teilreaktion der reaktiven Komponente(n) der Pulvermischung - freigesetzt wird, sodass daraufhin die Bestandteile der Pulvermischung durch Oberflächenklebung granulieren.

Um die erforderlichen geringen Mengen an Flüssigkeit möglichst genau einstellen und beherrschen zu können, kann beispielsweise ein Erwärmen bzw. Erhitzen der Pulvermischung von entscheidendem Vorteil sein, um dadurch zumindest einen Teil des Kristallwassers der kristallwasserhältigen Komponente(n) der Pulvermischung auszutreiben.

Zusätzlich bzw. alternativ lässt sich aber die Freisetzung zumindest eines Teiles des zur Reaktion erforderlichen Wassers auch durch eine wenigstens teilweise Reaktion der Pulverkomponenten miteinander erzielen. Eine solche teilweise Reaktion kann dann stattfinden, wenn die Pulvermischung wenigstens eine saure Komponente, vorzugsweise eine organische Säure wie z.B. Zitronensäure, Weinsäure, Äpfelsäure, Fumarsäure, Adipinsäure oder eine Mischung davon, und gleichzeitig auch wenigstens eine alkalische Komponente, beispielsweise ein Alkali- oder Erdalkalicarbonat, enthält. Durch Säure/Basen-Reaktion wird unter Abspaltung von Wasser ein, vorzugsweise saures, Salz gebildet und dabei die oberflächliche Verklebung der Pulverkomponenten zu Granulaten ermöglicht. Eine solche Pulvermischung, die bei Reaktion der Komponenten miteinander vorherberechenbare Mengen an Flüssigkeit abgibt, ist beispielsweise eine Brausepulvermischung.

In bestimmten Fällen kann es von Vorteil sein, wenn anstelle der organischen Säure oder zusätzlich zur organischen Säure wenigstens ein anderer Protonendonator, beispielsweise Natriumhydrogenphoshat, Natriumdihydrogenpyrophosphat oder Natriumbisulfit, zusammen mit wenigstens einer alkalischen Komponente, vorzugsweise einem Alkali- oder Erdalkalicarbonat bzw Alkali- oder Erdalkalibicarbonat, in der Pulvermischung vorgelegt wird.

Obwohl die Benutzung des Kristallwassers selbst und die Austreibung desselben durch Erwärmen oder Erhitzen, vorzugsweise auf Temperaturen von 30 - 85°C, insbesondere 50-75°C und gegebenenfalls 65°C ± 10%, bevorzugt ist, kann es für manche Pulver vorteilhaft sein, wenn man zusätzlich von aussen Klebelösung zudosiert, um so die reaktive Granulierung in Gang zu bringen und/oder zu unterstützen. Zu diesem Zweck wird im Bereich des Pulvereingabeendes der Trommel eine wenigstens angenähert der Menge an Kristallwasser entsprechende Menge an zusätzlicher Flüssigkeit, wie Wasser, Alkohol, ein Wasser-Alkohol-Gemisch, eine Alkali- und/oder Erdalkalilösung über Düsen oder Zerstäuber feinst verteilt eingesprüht oder in Dampfform zugegeben.

Im Falle der speziellen Form einer Alkoholzudosierung, beispielsweise eines geeigneten Alkohols, gegebenenfalls in Mischung mit Wasser, enthält die Pulvermischung mindestens eine saure Komponente, welche bei Reaktion mit dem Alkohol Wasser abgibt, sodass die Flüssigkeitsmenge, die zur Bildung einer oberflächlich wirkenden Klebelösung erforderlich ist, zumindest teilweise durch die Reaktion des zugegebenen Alkohols mit der sauren Komponente erzeugt wird. Gegebenenfalls kann diese Reaktion auch unter Mitwirkung eines geeigneten Katalysators, vorzugsweise eines Protonendonators, insbesondere geringer Mengen einer Mineralsäure, durchgeführt werden. Je nach Art des Katalysators kann er entweder als Pulverkomponente in der Pulvermischung vorgelegt oder in geeigneter Form - vorzugsweise in wässriger Lösung - von extern zudosiert werden. Darüber hinaus kann die Menge an Kristallwasser auch noch dadurch eingestellt werden, dass beispielsweise von einer Pulverkomponente ein Teil im wasserfreien Zustand, ein anderer Teil in kristallwasserhältiger Form beigemischt wird.

Für manche Anwendungen, insbesondere für Brausepulver, ist es besonders günstig, wenn die Pulvermischung, insbesondere Zitronensäure mit einem Alkalioder Erdalkalicarbonat, wenigstens teilweise, z.B. zu 20-50%, zu einem sauren Salz umgesetzt wird. Dadurch wird die Bildung schlecht löslicher, sekundärer und tertiärer Salze vermieden.

Es versteht sich aber, dass die Erfindung - obwohl für Brausepulver bevorzugt angewandt - keineswegs darauf beschränkt ist, sondern überall dort anwendbar ist, wo reaktive Bestandteile granuliert werden sollen.

Es versteht sich weiters, dass es auf die Beherrschung der sich in der Trommel abspielenden Reaktion entscheidend ankommt. Ein wichtiges Mittel dazu wurde bereits genannt, nämlich die Bemessung der zur Bildung einer klebrigen Phase als "Granulierhilfsmittel" benötigten Flüssigkeit.

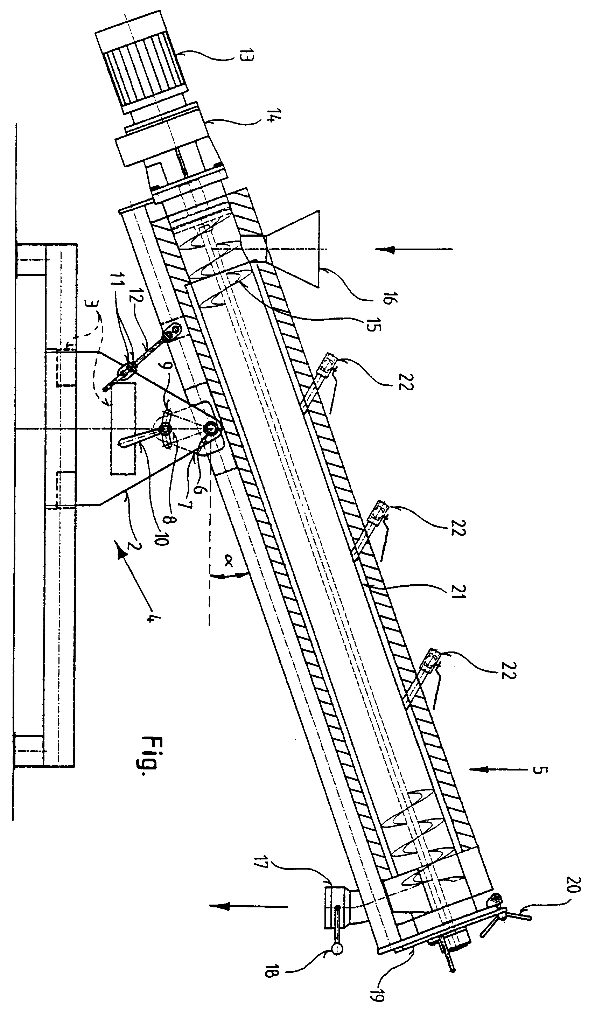

Weitere Einzelheiten der Erfindung ergeben sich an Hand der nachfolgenden Beschreibung einer in der einzigen Figur der Zeichnung schematisch dargestellten Vorrichtung zur Durchführung des erfindungsgemässen Verfahrens, sowie an Hand der später besprochenen Beispiele.

Die Figur zeigt einen Trommelgranulator, wie er für die Durchführung der später erläuterten Ausführungsbeispiele benutzt wurde, in Seitenansicht, teilweise im Schnitt. Es versteht sich jedoch, dass die Erfindung keineswegs auf den dargestellten Typ eines Trommelgranulators beschränkt ist, sondern dass im Rahmen der Erfindung zahlreiche Abwandlungen möglich sind, auf die im einzelnen noch hingewiesen wird.

Auf einem aus einem Fussgestell 1, Seitenwangen 2 und strichliert angedeuteten Querholmen 3 bestehenden Gestell 4 ist eine stationäre Trommel 5 schwenkbar befestigt. Hierzu ist an den Seitenwangen 2 eine Schwenkwelle 6 befestigt, mit der ein Sektor 7 starr verbunden ist. Das untere Ende des Sektors 7 trägt einen Stift oder Bolzen 8, der einen Bogenschlitz 9 der Seitenwange 2 durchsetzt. Das Ende des Bolzens 8 ist mit einem Gewinde (nicht gezeigt) versehen, in das ein Innengewinde eines Klemmhebels 10 eingreift, so dass die Trommel 5 beim Justieren ihrer Schwenklage mit Hilfe des Klemmhebels 10 provisorisch jeweils festgeklemmt werden kann.

Zu einer solchen Justierung werden die Muttern 11 an einer Verstrebungsstange 12 gelöst und nach erfolgter Einstellung des Neigungswinkels der Trommel 5 wieder festgezogen, so dass die Trommel 5 am Gestell in einer stabilen Lage gehalten wird. Daher ist es vorteilhaft, wenn die Schwenkachse 6 wenigstens annähernd in der Schwerpunktachse der Trommel 5 angeordnet ist, die hier deswegen - bezogen auf die Figur - relativ weit nach links versetzt ist, weil am linken Ende ein Motor 13 samt Untersetzungsgetriebe 14 befestigt ist.

Dieser Motor 13 dient zum Antrieb einer im Inneren der Trommel 5 drehbar gelagerten Schnecke 15, die über einen Trichter 16 eingefülltes, zu granulierendes Pulver aufwärts gegen einen Auslassstutzen 17 hin bewegt, der gegebenenfalls mittels eines Schwenkschiebers und eines damit verbundenen Hebels 18 verschliessbar sein kann. Zur Reinigung der Trommel ist vorzugsweise der obere Lagerdeckel 19 mittels Flügelschrauben 20 abnehmbar befestigt. Der sich so ergebende Anstiegswinkel $\alpha$ der Trommel 5 wird im allgemeinen etwa 20 - 40° zur Horizontalen betragen, kann aber gegebenenfalls auch flacher eingestellt werden. Bei über 45° liegenden Winkeln besteht bereits die Möglichkeit, dass das Pulver innerhalb der Trommel 5 von der Schnecke 15 nicht mehr eindeutig mitgenommen wird und ein gewisser Rückfluss stattfindet, was aber gegebenenfalls auch erwünscht sein mag, weil dadurch bereits weiter oben gebildete Granulate wieder zurück, in den tieferen Teil rollen können und dort als Initiatoren wirken können.

Bei der Befüllung der Trommel 5 sind zwei Vorgangsweisen denkbar. Entweder wird nur so viel Pulver eingefüllt bzw. durch entsprechende Einstellung der Drehzahl der Schnecke 15 abgeführt, dass der innere Boden der Trommel maximal bis zur Höhe der Schneckengänge, d.h. bis zum Innendurchmesser der Schneckenflügel, bedeckt ist, was bevorzugt ist. In diesem Falle wird die Verweilzeit des Pulvers innerhalb der Trommel 5 durch die Schneckendrehzahl genau bestimmt.

Die andere Möglichkeit besteht darin, dass der oben erwähnte Rückfluss von Granulaten zur Initiierung durch stärkeres Befüllen der Trommel 5 absichtlich gefördert wird, was allerdings zu einem breiten Verweilzeitspektrum führt und bei gewissen Reaktionsarten deren Steuerung erschweren kann. In diesem Zusammenhang ist auch die Möglichkeit zu sehen, die Verweilzeit der Pulvermischung bzw. der Granulate in der Trommel 5 durch die geometrische Form der mechanischen Fördereinrichtung, beispielsweise der Förderschnecke, zu beeinflussen. So lässt sich beispielsweise durch Öffnungen oder Durchbrechungen in den Schneckenflügeln ein mehr oder weniger gut definierter Rückfluss an Granulat erzielen und wunschgemäss steuern.

Wenn im Rahmen dieser Beschreibung von einem "Pulver" die Rede ist, das über den Einfülltrichter eingegeben wird, so versteht es sich, dass damit nichts über dessen Korngrösse ausgesagt werden soll, sondern dass es vielmehr ebenfalls möglich ist, körniges Material, wie etwa Vorgranulate einzufüllen; in diesem Sinne soll hier der Ausdruck "Pulver" verstanden werden.

Die Drehzahl der Schnecke 15 wird im allgemeinen so eingestellt, dass sich eine Verweilzeit von 2 bis 12 Minuten, vorzugsweise von 3 bis 10 Minuten, ergibt. Damit wird die Durchschnittsgeschwindigkeit der einzelnen Partikel in einer Granuliertrommel üblicher Grösse bei 0,3 bis 1,0 cm/s liegen, vorzugsweise im Bereich von 0,4 bis 0,8 cm/s. Die selben Möglichkeiten ergeben sich auch bei Verwendung einer Drehtrommel mit stationärer oder entgegengesetzt rotierender Misch- und Fördereinrichtung, beispielsweise einer Förderschnecke.

Ob Füllungsgrad, Neigung der Trommel, Drehzahl der Trommel und/oder der Fördereinrichtung, Geometrie der Fördereinrichtung oder eine Kombination davon zur Verweilzeitsteuerung angewandt wird, hängt nicht zuletzt auch von der Zusammensetzung der Pulvermischung und der für die Reaktion (die exotherm oder endotherm ablaufen kann) gewählten Temperatur ab.

Im allgemeinen wird es zweckmässig sein, mindestens im Einfüllbereich der Trommel 5 Wärme zuzuführen. Obwohl im Rahmen der Erfindung auch drehende Trommeln angewandt werden können, die dann beispielsweise im Sinne der DE-B-1257747 mit einem ins Trommelinnere hineinragenden Brenner ausgestattet sein mögen, mit im Inneren der Trommel sich über deren Länge erstreckenden Infrarot- oder Mikrowellenstrahlern, oder im Sinne der US-A-3101040 mit einem Doppelmantel zur Erwärmung mittels eines Heizfluides (z.B. über eine Dreheinführung im Bereiche der Längsachse), versteht es sich, dass für die Heizung eine stationäre Trommel von besonderem Vorteil ist, weil sich dadurch die Zufuhr der Heizenergie vereinfacht.

Andererseits bedeutet dies, dass sich die Windungen der Schnecke 15 dann gegenüber den Trommelinnenwänden bewegen müssen, wenn man eine Zwangsförderung anwenden will und sich nicht nur auf eine, gegebenenfalls auch abwärts gerichtete, Trommelneigung für die Förderung des Pulvers verlassen will. Diese Relativbewegung der Schnecke 15 bezüglich der Trommelinnenwände bedeutet, dass Pulver infolge von Toleranzen zwischen die Schneckenflügel und die Trommelwand geraten können, was dann zu einer grösseren Menge an unerwünschten Feinteilen führen kann. Dem lässt sich entweder dadurch begegnen, dass die Schnecke am Aussenumfang ihrer Schneckenflügel mit einer entsprechenden Dichtung ausgestattet wird, wie es in der Technik bekannt ist, oder dass man doch auf eine Drehtrommel zurüchgreift, die die Schneckengänge in ihrem Inneren befestigt enthält, wie dies etwa bei der schon erwähnten CH-A-478591 der Fall ist. Im allgemeinen lässt sich aber mit heutigen Technologien (z.B. Herstellung der miteinander zusammenwirkenden Teile von Schnecke 15 und/oder Trommel 5 mittels Laserbearbeitung) bereits ein derart geringes Mass an Toleranzen erzielen, dass auch die Verwendung der gezeigten stationären Trommel 5 kein Problem darstellt.

Daher wird im vorliegenden Fall eine elektrische Beheizung der Trommel 5 angewandt, indem rund um die stationäre Trommel 5 eine Heizmatte 21 in drei voneinander getrennten Abschnitten gelegt wird. Jeder der Abschnitte besitzt eine gesonderte und für sich einstellbare Energiezuführeinrichtung 22, so dass innerhalb der Trommel 5 über deren Länge unterschiedliche Temperaturen eingestellt werden können.

Wenn im Rahmen dieser Beschreibung von verschiedenen Verstellmöglichkeiten, wie des Winkels $\alpha$, der Schneckendrehzahl oder der Temperatur die Rede ist, so versteht es sich, dass die Erfindung keineswegs darauf beschränkt ist, zumal die Einstellung für ein bestimmtes zu verarbeitendes Produkt ja konstant bleiben kann. Andererseits empfiehlt sich die Anordnung von Verstellmöglichkeiten dann, wenn ein Wechsel der zu verarbeitenden Produkte erwünscht ist.

Die Heizmatte 21 kann an sich beliebiger Art sein. Beispielsweise werden am Markt in Russland gefertigte Gewebe aus Kohlefasern angeboten, die einen guten Wirkungsgrad aufweisen. Auch herkömmliche, mit Heizdrähten versehene Matten sind aber einsetzbar. Mit dieser oder einer alternativen Heizeinrichtung werden Temperaturen im Inneren der Trommel 5 erzeugt, die in einer bevorzugten Ausführungsform vor allem dazu gedacht sind, das Kristallwasser wenigstens einer Komponente auszutreiben und so eine gezielte und gesteuerte Teilreaktion zu initiieren und/oder ablaufen zu lassen, die eine klebende Oberfläche der Partikel ergibt und die Granulation hervorruft bzw. begünstigt. Diese Temperaturen können aber auch so gewählt werden, dass eine Flüssigkeit abgebende Teilreaktion initiiert wird, worauf sich derselbe Effekt ergibt. Daher erfolgt die Erwärmung vorzugsweise auf eine 30°C übersteigende Temperatur, insbesondere auf wenigstens 50°, zweckmässig auf eine Temperatur von 55°C bis 85°C, gegebenenfalls auf 65°C $\pm$ 10%. Bei höheren Temperaturen besteht die Gefahr, dass die Verdunstung zu rasch erfolgt, so dass die ausgetriebene oder durch die Reaktion erhaltene Flüssigkeit nicht mehr im ausreichenden Masse zur Verfügung steht. Andererseits ermöglicht es gerade eine feststehende Trommel 5 in besonders einfacher Weise etwa im Einfüllbereich, nahe dem Trichter 16 oder knapp danach eine geringe Menge an Flüssigkeit, wie Wasser und/oder Alkohol, zur Initiierung der Reaktion mittels entsprechender Düsen zuzuführen. Beispiele für solche Trommelkonstruktionen mit Sprühdüsen finden sich in der schon erwähnten DE-B-1257747, in der EP-B-0188390 oder in den US-A-3101040 und 3340018.

Auf diese Weise kann man davon ausgehen, dass im ersten, untersten Teil der Trommel 5 zunächst noch eine Mischung und Homogenisierung der Pulverbestandteile unter gleichzeitigem Aufwärmen erfolgt. Dem kommt entgegen, dass mindestens in diesem Bereich die Schneckenflügel in der gezeigten weise (an nicht dargestellten Armen gehalten) radial einwärts mit Durchbrechungen versehen sind, die einen Übertritt von Pulverteilchen von einem durch die Schnecke geschaffenen Abteil in das andere ermöglichen. Gegebenenfalls kann die Schnecke 15 in diesem Bereich über ihren Umfang auch Unterbrechungen aufweisen, so dass sich die Schneckenflügel jeweils bogenförmig nur über einen Teil des Umfanges erstrecken und dazwischen jeweils ein Zwischenraum frei bleibt, wie dies für Mischerschnecken an sich bekannt ist.

Am Ende des ersten und zu Beginn des zweiten Drittels wird in der Regel Flüssigkeit, im allgemeinen Wasser, freigesetzt, so dass es auch optimal verteilt ist und eine Klumpenbildung nicht zu befürchten ist - ein weiterer Vorteil des erfindungsgemässen Verfahrens, das eben auf diese Weise Flüssigkeitsansammlungen vermeidet. Nun erfolgt dann die Granulierung unter ständigem Abrollen der Partikel, die bis zum Ende des dritten Drittels der Länge der Trommel 5 abgeschlossen sein sollte. Gegebenenfalls kann daher auf eine Beheizung dieses letzten Drittels verzichtet werden.

Im Anschluss daran wird das am Stutzen 17 austretende Granulat, allenfalls nach einem Siebvorgang zur Abtrennung von Unter- und gegebenenfalls auch von Überkorn, entweder als solches in Säckchen abgefüllt oder auch einer Tablettenpresse zugeführt und zu Tabletten verpresst. Das Sieben kann, auf Grund der durch das erfindungsgemässe Verfahren erzielbaren engen Korngrössenverteilung, gegebenenfalls sogar entfallen, was einen weiteren Vorteil des erfindungsgemässen Verfahrens darstellt. Gewünschtenfalls erfolgt aber auch ein zweiter Granuliervorgang, wenn zunächst nur die Brausemischung granuliert wird, um später mit den jeweils beabsichtigten Additiven in einem zweiten Vorgang zu Fertiggranulaten verarbeitet zu werden.

## BEISPIELE

Die folgenden Beispiele wurden mit Hilfe einer Trommel gemäss der Zeichnung durchgeführt, wobei die Durchlaufgeschwindigkeit auf etwa 0,65 cm/s eingestellt war. Dies ergab in jedem Fall eine Verweilzeit der einzelnen Partikel von $2\frac{1}{2}$ bis 4 min. Die Temperatur im trommelförmigen Reaktor betrug 70°$\pm$10°C. Es wurden lediglich Basisgranulate hergestellt, denen gewünschtenfalls in einem weiteren Vorgang entsprechende Additive und/oder Wirkstoffe zugegeben werden können, um fertige Granulate zu erzeugen. In beiden Fällen ergab sich das für die Reaktionsgranulation benötigte Wasser einerseits aus dem Kristallwasser der als Säure im kristallisierten Zustand zugefügten Komponente und andererseits aus der Umsetzung des Carbonates, wobei die Reaktion durch die Temperatur und den Anteil der kristallförmig vorliegenden Komponente, praktisch stöchiometrisch, regulierbar ist.

Beispiel 1:

850 g Natriumbicarbonat, 2280 g wasserfreie Zitronensäure (kristallisiert), 150 g pulverförmige Zitronensäure (enthaltend ca. 14 g $H_2O$ als Kristallwasser) und 200 g Natriumcarbonat wurden vorgemischt und in den Einfülltrichter 16 der Trommel 5 nach und nach eingefüllt. Nach schwachen 4 min erhielt man am Stutzen 17 die Gesamtmenge als Granulat. Die Trommel 5 wurde danach geöffnet und gereinigt, wobei sich nur geringe staubförmige Reste des Pulvers darin fanden.

Beispiel 2:

2500 g Calciumcarbonat, 1050 g pulverförmige Zitronensäure (enthaltend ca. 98 g $H_2O$ als Kristallwasser) und 3324 g wasserfreie Zitronensäure wurden in vorgemischtem Zustande in den Trichter 16 eingefüllt. Nach der Fertigstellung des Granulates wurde dieses einer Siebanalyse unterzogen:

| Korngrösse (mm) | Anteil (%) |
|---|---|
| > 0,710 | 11,2 |
| 0,500-0,710 | 16,6 |
| 0,355-0,500 | 31,4 |
| 0,250-0,355 | 24,7 |
| 0,100-0,250 | 12,7 |
| < 0,100 | 3,4 |

Vergleichsbeispiel:

Zum Vergleich wurden Mischungen A und B gleicher Zusammensetzung wie in Beispiel 2 nach einer herkömmlichen Methode (Chargenverfahren) verarbeitet. Mischung B besass zusätzlich 300 mg Äpfelsäure. Die Ergebnisse der Siebanalyse:

| Korngrösse (mm) | Mischung A | Mischung B |
|---|---|---|
| | Anteil (%) | |
| > 0,710 | 5,3 | 4,6 |
| 0,500-0,710 | 4,0 | 3,3 |
| 0,355-0,500 | 16,8 | 17,3 |
| 0,250-0,355 | 20,9 | 21,7 |
| 0,100-0,250 | 23,8 | 23,2 |
| < 0,100 | 28,6 | 29,4 |

Im Vergleich zur Siebanalyse des Beispiels 2 zeigt sich, dass dort eine eindeutige Spitze im Bereiche von 0,355-0,500 zu finden ist, was der gewünschten Granulatgrösse entspricht.

Dagegen sind die Werte des Vergleichsbeispieles derart gegen die kleineren Korngrössen verschoben, dass sich in ersichtlicher Weise ein relativ grosser Anteil an Feinteilen <0,100 mm von 28,6 und 29,4 % ergibt, was auch den relativ grössten Anteil aller Fraktionen ausmacht. Daraus ist ersichtlich, dass durch das erfindungsgemässe Verfahren nicht nur abzusiebende Feinteile in hohem Masse vermieden werden, sondern dass sich auch eine höhere Ausbeute an brauchbaren Granulaten und damit eine höhere Wirtschaftlichkeit des Verfahrens ergibt, was mit dazu beiträgt, dass weit höhere Produktionsmengen erzielbar sind.

Wenn auch die Erfindung an Hand von Ausführungsbeispielen erläutert wurde, wie sie gerade zur Herstellung von Brausepulvern angewandt würden, so ist aus dem Obigen wohl auch ersichtlich, dass es ohne weiteres denkbar wäre, die besprochenen Basisgranulate nur zu dem Zweck herzustellen, um damit schlecht granulierbares, an sich inertes Material in Granulaten zu binden, so dass mit dem erfindungsgemässen Verfahren an sich eine grosse Anzahl von Produkten hergestellt werden kann.

Ferner versteht es sich, dass es gegebenenfalls genügt, in den Einfülltrichter nur eine einzige Komponente einer Pulvermischung einzufüllen, wogegen die andere, beispielsweise zur Initiierung des Granuliervorganges, ins Innere der Trommel 5 eingedüst wird.

Im Rahmen der Erfindung wäre auch eine Regelung der Reaktionsbedingungen, also der Schneckendrehzahl, der Neigung der Trommel 5, der Zugabemenge an kristallwasserhältigem Material und/oder der Temperatur denkbar, wobei die Granulatbildung als bestimmender Faktor dient. Diese kann durch anschliessendes Sieben und Wägen bestimmt werden oder, einfacher, auf optischem Wege, etwa mittels Spektralanalyse und/oder durch Bildauswertung, wie dies an sich bekannt ist.

**Patentansprüche**

1. Verfahren zum kontinuierlichen Herstellen von Granulat aus einer Pulvermischung aus mindestens zwei Komponenten, wobei das Granulieren in einer zur Horizontalen geneigten Trommel (5) erfolgt, indem das Pulver am einen Ende eingegeben und das Granulat am anderen Ende entnommen wird, wogegen es innerhalb der Trommel (5) während einer gewünschten Verweilzeit unter Durchführung einer Rollbewegung unter weitgehender Vermeidung von Scherkräften zwangsweise transportiert wird, **dadurch gekennzeichnet,** dass wenigstens eine Komponente in Kristall- oder kristalliner Form vorliegt, wenigstens eine Komponente Kristallwasser enthält und/oder reaktiv ist, und eine wenigstens angenähert der Kristallwassermenge entsprechende Flüssigkeitsmenge, die zur Bildung einer oberflächlich wirkenden Klebelösung ausreicht, innerhalb der Trommel (5) aus der Pulvermischung freigesetzt wird, worauf man die Bestandteile der Pulvermischung durch Oberflächenklebung granulieren lässt.

2. Verfahren nach Anspruch 1, dadurch gekennzeichnet, dass die Pulvermischung zum wenigstens teilweisen Austreiben des Kristallwassers erwärmt wird.

3. Verfahren nach Anspruch 1 oder 2 mit wenigstens einer reaktiven Komponente, dadurch gekennzeichnet, dass die Pulvermischung wenigstens eine alkalische und wenigstens eine saure Komponente enthält, insbesondere die Komponenten einer Brausepulvermischung, bei der wenigstens ein Teil des zur Reaktion erforderlichen Wassers durch eine wenigstens teilweise Reaktion der Komponenten miteinander gebildet wird.

4. Verfahren nach einem der vorhergehenden Ansprüche, dadurch gekennzeichnet, dass in der Pulvermischung wenigstens eine organische Säure, vorzugsweise Zitronensäure oder Weinsäure, und/oder wenigstens ein Protonendonator, wie Natriumdihydrogenphosphat, Natriumdihydrogenpyrophosphat oder Natriumbisulfit, und wenigstens eine alkalische Komponente, vorzugsweise ein Alkali- oder Erdalkalicarbonat oder -bicarbonat, vorgelegt wird.

5. Verfahren nach einem der vorhergehenden Ansprüche, dadurch gekennzeichnet, dass die Pulvermischung - insbesondere Zitronensäure mit einem Alkali- und/oder Erdalkalicarbonat - wenigstens teilweise, z.B. zu 20-50%, zu einem sauren Salz umgesetzt wird.

6. Verfahren nach einem der vorhergehenden Ansprüche, dadurch gekennzeichnet, dass ausserdem im Bereich des Pulvereingabeendes (16) der Trommel (5) eine wenigstens angenähert der Menge an Kristallwasser entsprechende Menge an zusätzlicher Flüssigkeit, wie Wasser, Alkohol, ein Wasser-Alkohol-Gemisch, eine Alkali- und/oder Erdalkalilösung über Düsen oder Zerstäuber eingesprüht oder in Dampfform zugegeben wird.

7. Verfahren nach Anspruch 6, dadurch gekennzeichnet, dass die Pulvermischung mindestens eine saure Komponente enthält, welche bei Reaktion mit Alkoholen Wasser abgibt, und die Flüssigkeitsmenge, die zur Bildung einer oberflächlich wirkenden Klebelösung erforderlich ist, zumindest teilweise durch die Reaktion des zugegebenen Alkohols mit der sauren Komponente - gegebenenfalls unter Mitwirkung eines Katalysators - erzeugt wird.

8. Verfahren nach einem der vorhergehenden Ansprüche, dadurch gekennzeichnet, dass die Trommel (5) um einen Winkel ($\alpha$) von etwa 20 - 40° zur Horizontalen, insbesondere vom Eingabeende (16) zum Entnahmeende (17) hin aufwärts, geneigt wird.

9. Verfahren nach einem der vorhergehenden Ansprüche, dadurch gekennzeichnet, dass die Verweilzeit der Pulvermischung auf etwa 2 bis 12 Minuten, vorzugsweise 3 bis 10 Minuten, eingestellt wird.

10. Verfahren nach einem der vorhergehenden Ansprüche, dadurch gekennzeichnet, dass die Pulvermischung bzw. das Granulat mittels einer mechanischen Fördereinrichtung, vorzugsweise einer Förderschnecke, transportiert wird, und zu diesem Zweck entweder eine stationäre Trommel mit rotierender Fördereinrichtung oder eine Drehtrommel mit stationärer oder entgegengesetzt rotierender Fördereinrichtung eingesetzt wird.

11. Verfahren nach Anspruch 10, dadurch gekennzeichnet, dass die Verweilzeit der Pulvermischung bzw. des Granulates innerhalb der Trommel durch die Wahl des Füllungsgrades, der Drehzahl der Trommel und/oder der Fördereinrichtung, der Geometrie der Fördereinrichtung, der Neigung der Trommel oder einer Kombination davon eingestellt wird.

12. Verfahren nach einem der vorhergehenden Ansprüche, dadurch gekennzeichnet, dass das am Entnahmeende (17) entnommene Granulat - vorzugsweise im Vakuum - getrocknet und gegebenenfalls anschliessend zu Tabletten verpresst wird.

## Claims

1. Process for continuously producing a granulated material from a powder mixture of at least two components, the granulation being effected in a drum (5) inclined relative to the horizontal, by introducing the powder at one end and removing the granulated material at the other end, towards which it is positively transported within the drum (5) during a desired residence time with execution of a rolling movement with substantial avoidance of shear forces, characterized in that at least one component is present in crystal or crystalline form, at least one component contains water of crystallization and/or is reactive and an amount of liquid which corresponds at least approximately to the amount of water of crystallization and is sufficient for the formation of a superficially acting adhesive solution is liberated within the drum (5) from the powder mixture, whereupon the components of the powder mixture are allowed to undergo granulation by surface adhesion.

2. Process according to Claim 1, characterized in that the powder mixture is heated for at least partial expulsion of the water of crystallization.

3. Process according to Claim 1 or 2 with at least one reactive component, characterized in that the powder mixture contains at least one alkaline and at least one acidic component, in particular the components of an effervescent powder mixture, in which at least a part of the water required for the reaction is formed by an at least partial reaction of the components with one another.

4. Process according to any of the preceding Claims, characterized in that at least one organic acid, preferably citric acid or tartaric acid and/or at least one proton donor, such as sodium dihydrogen phosphate, sodium dihydrogen pyrophosphate or sodium bisulphite, and at least one alkaline component, preferably an alkali metal or alkaline earth metal carbonate or bicarbonate, are initially taken in the powder mixture.

5. Process according to any of the preceding Claims, characterized in that the powder mixture - in particular citric acid with an alkali metal and/or alkaline earth metal carbonate - is converted at least partially, for example to an extent of 20-50%, into an acidic salt.

6. Process according to any of the preceding Claims, characterized in that an amount of additional liquid which corresponds at least approximately to the amount of water of crystallization, such as water, alcohol, a water/alcohol mixture, an alkali and/or alkaline earth solution, is sprayed in via nozzles or atomizers or added in vapour form also in the region of the powder feed end (16) of the drum (5).

7. Process according to Claim 6, characterized in that the powder mixture contains at least one acidic component which releases water on reaction with alcohols, and the amount of liquid which is required for formation of a superficially acting adhesive solution is produced at least partially by the reaction of the added alcohol with the acidic components - optionally with participation by a catalyst.

8. Process according to any of the preceding Claims, characterized in that the drum (5) is inclined by an angle $\alpha$ of about 20 - 40° relative to the horizontal, in particular upwards from the feed end (16) to the removal end (17).

9. Process according to any of the preceding Claims, characterized in that the residence time of the powder mixture is adjusted to about 2 to 12 minutes, preferably 3 to 10 minutes.

10. Process according to any of the preceding Claims, characterized in that the powder mixture or the granulated material is transported by means of a mechanical conveyor apparatus, preferably a conveyor screw, and either a stationary drum with rotating conveyor apparatus or a rotating drum with stationary or counter-rotating conveyor apparatus is used for this purpose.

11. Process according to Claim 10, characterized in that the residence time of the powder mixture or of the granulated material within the drum is adjusted by the choice of the degree of filling, the speed of the drum and/or of the conveyor apparatus, the geometry of the conveyor apparatus, the inclination of the drum or a combination thereof.

12. Process according to any of the preceding Claims, characterized in that granulated material removed at the removal end (17) is dried - preferably in vacuo - and optionally then compressed to give tablets.

## Revendications

1. Procédé de fabrication en continu de granulés, à partir d'un mélange pulvérulent constitué d'au moins deux composants, la granulation s'effectuant dans un tambour (5) incliné par rapport à l'horizontale, en introduisant la poudre à une extrémité et les granulés étant prélevés à l'autre extrémité, les granulés étant par contre transportés de façon obligatoire à l'intérieur du tambour (5) pendant un temps de séjour souhaité avec exécution d'un mouvement de roulement en évitant notablement la production d'efforts de cisaillement, caractérisé en ce qu'au moins un composant se présente sous une forme de cristal ou cristalline, au moins un composant contient de l'eau de cristallisation et/ou est réactif, et une quantité de liquide, correspondant au moins à peu près à la quantité d'eau de cristallisation, suffisante pour former une solution adhésive, agissant en surface, étant dégagée à partir du mélange pulvérulent, à l'intérieur du tambour (5), suite à quoi les composants du mélange pulvérulent sont transformés en granulés sous l'effet de l'adhésion en surface.

2. Procédé selon la revendication 1, caractérisé en ce que le mélange pulvérulent est chauffé en vue d'obtenir une expulsion au moins partielle de l'eau de cristallisation.

3. Procédé selon la revendication 1 ou 2, avec au moins un composant réactif, caractérisé en ce que le mélange pulvérulent contient au moins un composant alcalin et au moins un composant acide, en particulier les composants d'un mélange pulvérulent effervescent, pour lequel au moins une partie de l'eau nécessaire à la réaction est constituée par une réaction au moins partielle des composants ensemble.

4. Procédé selon l'une des revendications précédentes, caractérisé en ce qu'est présent dans le mélange pulvérulent au moins un acide organique, de préférence de l'acide citrique ou de l'acide tartrique, et/ou au moins un donneur de protons, tel que du dihydrogène phosphate de sodium, dihydrogène pyrophosphate de sodium ou bisulfite de sodium, et au moins un composant alcalin, de préférence un carbonate ou un bicarbonate alcalin ou alcalino-terreux.

5. Procédé selon l'une des revendications précédentes, caractérisé en ce que le mélange pulvérulent - en particulier de l'acide citrique avec un carbonate alcalin et/ou alcalino-terreux - est converti au moins partiellement, par exemple jusqu'à 20 à 50 %, en un sel acide.

6. Procédé selon l'une des revendications précédentes, caractérisé en ce que, en outre, dans la zone de l'extrémité d'introduction de poudre (16) du tambour (5) est introduite avec pulvérisation une quantité, correspondant au moins à peu près à la quantité d'eau de cristallisation, d'un liquide supplémentaire, tel que l'eau, de l'alcool, un mélange eau-alcool, une solution alcaline ou alcalino-terreuse, ceci étant fait par des buses ou un pulvérisateur, ou bien l'addition est fait sous forme de vapeur.

7. Procédé selon la revendication 6, caractérisé en ce que le mélange pulvérulent contient au moins un composant acide qui, lors de la réaction avec des alcools, fournit de l'eau et la quantité de liquide, qui est nécessaire pour former une solution adhésive agissant en surface, est générée au moins partiellement par la réaction entre l'alcool ayant été ajoutée et le composant acide - le cas échéant avec effet conjoint d'un catalyseur.

8. Procédé selon l'une des revendications précédentes, caractérisé en ce que le tambour (5) est incliné d'un angle ($\alpha$) d'environ 20 à 40° par rapport à l'horizontale, en particulier est incliné en montée, en allant de l'extrémité d'introduction (16) à l'extrémité de prélèvement (17).

9. Procédé selon l'une des revendications précédentes, caractérisé en ce que le temps de séjour du mélange pulvérulent est réglé à environ 2 à 12 minutes, de préférence 3 à 10 minutes.

10. Procédé selon l'une des revendications précédentes, caractérisé en ce que le mélange pulvérulent, respectivement les granulés, sont transportés au moyen d'un dispositif de transport mécanique, de préférence une vis de transport, et à cette fin étant utilisé soit un tambour stationnaire ayant un dispositif de transport rotatif, soit un tambour tournant ayant un dispositif de transport, stationnaire ou bien tournant en sens inverse.

11. Procédé selon la revendication 10, caractérisé en ce que le temps de séjour du mélange pulvérulent, respectivement des granulés à l'intérieur du tambour, est réglé par la sélection du degré de remplissage, la vitesse de rotation du tambour et/ou du dispositif de transport, la géométrie du dispositif de transport, l'inclinaison du tambour ou bien une combinaison de ces facteurs.

12. Procédé selon l'une des revendications précédentes, caractérisé en ce que les granulés prélevés à l'extrémité de prélèvement (17) sont séchés - de préférence sous-vide - et, le cas échéant, travaillés ensuite par compression, pour donner des comprimés.

Fig.